# EUROPEAN PATENT SPECIFICATION

(11) **EP 3 769 715 B1**
(45) Date of publication and mention of the grant of the patent: **04.05.2022**
(21) Application number: 19000341.8
(22) Date of filing: 23.07.2019
(51) Int. Cl.: A61C 9/00

(54) **SYSTEM, METHOD AND COMPUTER PROGRAMS FOR LOCATING DENTAL IMPLANTS**
SYSTEM, VERFAHREN UND COMPUTERPROGRAMME ZUR ORTUNG VON ZAHNIMPLANTATEN
SYSTÈME, PROCÉDÉ ET PROGRAMMES INFORMATIQUES POUR LA LOCALISATION D'IMPLANTS DENTAIRES

(43) Date of publication of application: 27.01.2021
(73) Proprietor: ACCURATE FIT, S.L., 41013 Sevilla (ES)
(72) Inventor: Calle Bonet, Angel, 08197 Sant Cugat del Vallès (ES)
(74) Representative: Juncosa Miró, Jaime

(56) References cited:
- EP-A1- 1 722 710
- EP-A1- 2 907 474
- WO-A1-2017/070358
- US-B2- 7 751 865

## Description

### Field of the Invention

The present invention generally relates to the field of dental implants. In particular, the invention relates to a system, method, and computer program for the high accuracy placement of dental implants.

### Background of the Invention

European patent EP2907474-B1 describes a post for modeling dental implants by means of a radiologic test, said modeling comprising positioning X-ray detectable posts on the implants fitted in the mouth of a patient, performing a radiologic test of the patient's mouth having the posts positioned on the implants, converting the CT scan results into a three-dimensional computer model for CAD/CAM processing, defining the posts in the computer model, CAD/CAM modeling of the structure according to the computer model with the defined posts, and generating a file with the positions and orientations for calculation of the milling program for the dental prosthesis structures.

Patent EP1722710-B1 describes a method and marker element for determining the position of a dental implant which, like in the aforementioned prior art document, is based on the use of a single marker element which is fixed to a free end of said implant and produces a contrast in the X-ray or magnetic resonance imaging techniques.

WO2017070358-A1 discloses an attachment member for mating with a dental implant that includes a non-rotational structure and a body. The non-rotational structure is configured to mate with a corresponding non-rotational feature of the dental implant. The body extends from the non-rotational structure. The body has (i) an exterior side surface configured to at least partially engage gingival tissue adjacent to the dental implant, (ii) an exterior top surface that is exposed through the gingival tissue, (iii) a screw access bore for receiving a screw that attaches the attachment member to the dental implant in a removable fashion, and (iv) a set of radiopaque information markers that is located internal to the exterior side surface and the exterior top surface. The set of radiopaque information markers indicates information regarding the dental implant that is revealed in response to a scan from a computerized tomography (CT) scanner.

US7751865-B2 discloses a surgical navigation system for navigating a region of a patient that may include a non-invasive dynamic reference frame and/or fiducial marker, sensor tipped instruments, and isolator circuits. The dynamic reference frame may be placed on the patient in a precise location for guiding the instruments. The dynamic reference frames may be fixedly placed on the patient. Also the dynamic reference frames may be placed to allow generally natural movements of soft tissue relative to the dynamic reference frames. Also methods are provided to determine positions of the dynamic reference frames. Anatomical landmarks may be determined intra-operatively and without access to the anatomical structure.

Moreover, scientific articles [1, 2, 3] describe the existence of geometrical distortions in dental scanners. More specifically, scientific article [1] discloses a methodology for analyzing distortions in dental images obtained through cone-beam computed tomography techniques (CBCT). Scientific article [2] discloses a study comparing the accuracy of cone-beam computed tomography and computed tomography in the context of evaluating the diagnostic value and accuracy of fiducial marker localization for reference marker-based guided surgery systems. Scientific article [3] discloses another study for determining the reproducibility and accuracy of linear measurements in dental models derived from cone-beam computed tomography compared with digital dental casts.

Therefore, although the known prior art documents allow determining the orientation and position of dental implants with certain accuracy, new systems and methods for allowing an even more accurate placement of dental implants by means of a more accurate detection of reference or fiducial markers are required.

### References:

[1] John W. Ballrick et al. "Image distortion and spatial resolution of a commercially available cone-beam computed tomography machine". 2008. American Association of Orthodontists.
[2] Marcus Abboud et al. "Comparison of the Accuracy of Cone-beam Computed Tomography and Medical Computed Tomography: Implications for Clinical Diagnostics with Guided Surgery". Quintessence Publishing Co Inc. 536 Volume 28, Number 2, 2013.
[3] Olivier de Waard et al. "Reproducibility and accuracy of linear measurements on dental models derived from cone-beam computed tomography compared with digital dental casts". 2014. American Association of Orthodontists.

### Description of the Invention

The invention is as defined in claims 1 and 10. In order to solve the aforementioned drawbacks, the present invention provides, according to a first aspect, a system for the placement of dental implants according to claim 1.

According to the proposed system, the mentioned processing unit is configured for processing the at least one acquired three-dimensional image by means of implementing a first algorithm which detects how the second locators in the reference element are arranged in the image, calculates the distance between the second locators in the image, and calculates a correction factor by comparing said calculated distance with said known prefixed distance and position.

Likewise, the processing unit implements a second algorithm which detects in the image the first locators, groups them in correspondence to each post, by the number of elements and by proximity, applies an adjustment factor, taking into account said calculated correction factor, to one or more of the groups using a third point iteration algorithm, for example the ICP algorithm, providing a series of geometrical transformations of the first locators, and prepares a file using said series of geometrical transformations, such that the placement and axial orientation are indicated for each post.

The present invention is particularly useful for manufacturing bars for the replacement of multiple teeth by means of multiple prostheses.

In one embodiment, the first locators made of a radiologically visible material (also known as reference or fiducial markers) comprise one or more radiopaque markers and are preferably arranged in a specific pattern. Furthermore, the post/posts comprise a radiotransparent body which houses encapsulated therein first locators.

In one embodiment, the three-dimensional image is a tomographic image, for example, obtained by means of a cone-beam computed tomography technique, computed axial tomography technique, or the like.

In another embodiment, the mentioned reference element has a horseshoe shape or curve-concave wall, oriented towards the mouth of the patient, and is made particularly of a plastic material. The reference element may be suitable for the placement thereof inside the mouth of the patient or can include means/elements for the securing thereof on the outside of the mouth of the patient.

In yet another embodiment, the proposed system further includes a control element, preferably a ruby ball having known dimensions. The control element is suitable for the coupling/securing thereof to the patient during image acquisition.

The disclosure also provides a method for the placement of dental implants. The proposed method comprises acquiring, by means of an image acquisition system, at least one three-dimensional image of first locators made of a radiologically visible material included in one or more posts and of a reference element when each of said one or more posts is coupled in a dental implant of a patient and when the reference element is positioned around the teeth of the patient, wherein said reference element includes a series of second locators made of a radiologically visible material, distributed at prefixed distance and position on a surface of the reference element; and processing, by means of a processing unit, the acquired three-dimensional image.

The mentioned processing comprises implementing a series of algorithms to calculate the position and orientation of each of the posts present in the acquired image, sending this information in a file for subsequently designing multiprosthetic bars. To that end, more particularly the mentioned processing of the acquired image comprises implementing a first algorithm which detects how the second locators in the reference element are arranged in the image, calculates the distance between the second locators in the image, and calculates a correction factor by comparing said calculated distance with said prefixed distance and position; and implementing a second algorithm which detects in the image the first locators, groups the detected first locators, in correspondence to each post, by the number of elements and by proximity, applies an adjustment factor, taking into account said calculated correction factor, to one or more of the groups using a third point iteration algorithm, providing a series of geometrical transformations of the first locators, and prepares the mentioned file using said series of geometrical transformations, such that the placement and axial orientation are indicated for each post.

Particularly, in the proposed method, before detecting the arrangement of the second locators in the reference element, the first algorithm checks whether or not the image has experienced movement during the acquisition by using a control object having known dimensions, coupled/secured to the patient during the acquisition, and comparing the characteristics of the acquired image with those of the control object. If the result of the movement check certifies that the image has experienced movement, it is discarded and not taken into account for subsequent processing, acquiring a new image.

The mentioned comparison particularly comprises checking intensity characteristics, for example, the brightness or grayscale level, and morphological characteristics, for example, the diameter and sphericity, of the objects included in the image with the control object.

The invention also relates to a computer program product including code instructions which, once implemented in a computing system, cause a processing unit of the computing system to perform the processing of at least one acquired three-dimensional image.

### Brief Description of the Drawings

The foregoing and other features and advantages will be better understood based on the following detailed description of merely illustrative, non-limiting embodiments in reference to the attached drawings, in which:
Figs. 1A and 1B show different views of an embodiment of a post with the first locators, or fiducial markers.
Fig. 2 shows an embodiment of the reference element provided by the present invention.
Fig. 3 is a flow chart of the steps that are performed for processing the acquired three-dimensional images of the post and reference element, according to an embodiment of the present invention.

### Detailed Description of Several Embodiments

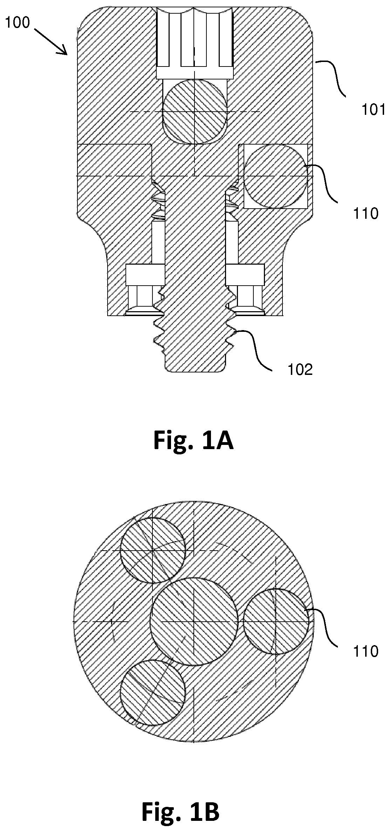

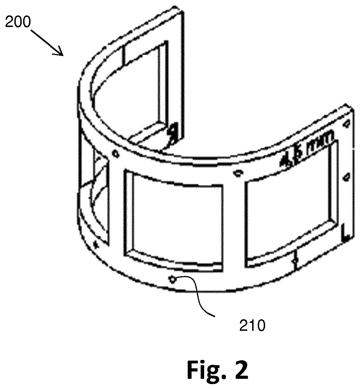

Figs. 1 and 2 show, respectively, embodiments of a post 100 and of the reference element 200 of the proposed system.

As observed in Figs. 1A and 1B, each post 100 comprises a radiotransparent body 101 with a threaded bolt 102 for the coupling thereof in a dental implant of a patient. Each post 100 internally defines a cavity in which there are housed fiducial markers 110 (or first locators as indicated in the claims) made of a material that is radiologically visible, for example, through a CT (computed tomography)-type ionizing radiation, CBCT (cone-beam computed tomography)-type ionizing radiation, or any other similar radiologic test. In the particular example shown in Fig. 1B, each post 100 includes three first locators 110 arranged in a specific pattern (which is non-limiting because it may include a larger number of locators). For example, the first locators 110 can be small ruby balls, all of them having one and the same or different diameter.

The mentioned reference element 200 is suitable for the positioning thereof around the teeth of the patient, either inside the mouth or on the outside. If the reference element 200 is positioned outside the mouth, it includes securing means/elements for that purpose. According to the example of Fig. 2, the reference element 200 has a horseshoe shape or curved-concave surface and is made of a plastic material. The reference element 200 includes in turn a series of second locators 210 made of a radiologically visible material, distributed at known prefixed distance and position, on a surface of the reference element 200. The second locators 210 are made of the same material as the first locators 110 and have a similar or even larger shape.

The proposed system further includes a standard image acquisition system (not illustrated), for example a scanner, for obtaining one or more three-dimensional tomographic images of the posts 100 and of the reference element 200 when they are positioned in the patient. Likewise, the system incorporates a computing system (also not illustrated) with one or more processors and a memory for processing of the acquired image/images.

The proposed system also particularly includes a control element, more particularly a ruby ball having known dimensions, for the coupling/fastening thereof to the patient during image acquisition. The control element is used to check if the acquired image/images has/have experienced movement during the acquisition.

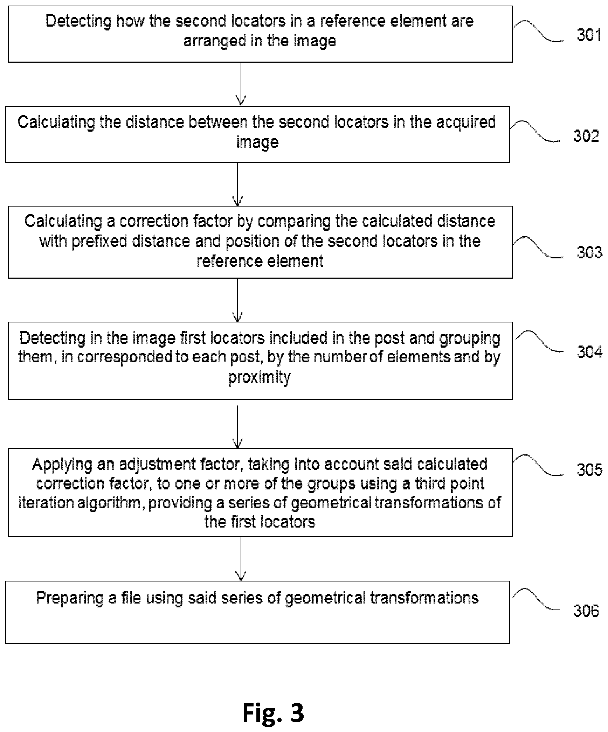

Now with reference to Fig. 3, it is shown an embodiment of the processing of an acquired three-dimensional image by the mentioned image acquisition system. The processing firstly includes, step 301, the detection, via a first algorithm or calibration algorithm, of how second locators in the mentioned reference element 200 are arranged in the acquired image, and the calculation, step 302, of the distance of the second locators in the acquired image. Subsequently, in step 303, a correction factor is calculated by comparing said calculated distance with the prefixed distance and position of the second locators on the surface of the reference element 200. Once the correction factor is calculated, a second algorithm or localization algorithm, step 304, detects in the image the first locators and groups them, in correspondence to each post 100, by the number of elements and by proximity. Then, in step 305, an adjustment factor is applied, taking into account said calculated correction factor, to one or more of the groups using a third point iteration algorithm, providing a series of geometrical transformations of the first locators. Finally, a file (for example, STL format or the like) is prepared using said series of geometrical transformations, such that the placement and axial orientation are indicated for each post 100.

In one embodiment, the mentioned processing also includes, prior to performing step 301, checking if the image has experienced movement during the acquisition (if this is the case, the image is not considered valid for subsequent processing, the image being discarded). To that end, upon receiving the image, a series of image processing algorithms which filter the elements according to their intensity characteristics (for example, brightness or grayscale level) and morphological characteristics (for example, diameter and sphericity) is applied, in search of an element in the image which complies with all the characteristics of the control object. If a single element is found, the image is labeled as suitable. In all the other cases, i.e., if more than one element and when no element is found, the image is labeled as unsuitable. The invention assumes that the movements of the patient during the acquisition introduce artifacts altering both the brightness and the shape of the control object in the acquired image. The control object therefore appears in the image with levels of brightness and shape that do not correspond with those that would be observed in a movement-free acquisition.

The proposed invention can be implemented in hardware, software, firmware, or any combination thereof. If it is implemented in software, the functions can be stored in or coded as one or more instructions or code in a computer-readable medium.

The computer-readable medium includes a computer storage medium. The storage medium can be any available medium that can be accessed by means of a computer. By way of non-limiting example, such computer-readable medium may comprise RAM, ROM, EEPROM, CD-ROM, or another optical disc storage, magnetic disk storage, or other magnetic storage devices, or any other medium that can be used for supporting or storing the desired computer code in the form of instructions or data structures and can be accessed by means of a computer. Disk and disc, as used herein, include compact discs (CDs), laser disc, optical disc, digital versatile disc (DVD), flexible disk, and Blu-ray disc, where disks normally reproduce data magnetically, whereas discs reproduce data optically with lasers. Combinations of the foregoing must also be included within the scope of computer-readable medium. Any processor and the storage medium can be housed in an ASIC. The ASIC can be housed in a user terminal. As an alternative, the processor and the storage medium can be housed as discrete components in a user terminal.

As used herein, the computer program products comprising computer-readable media include all forms of computer-readable medium except up to point where that medium is not considered as non-established transitory propagation signals.

The scope of the present invention is defined in the attached claims.

## Claims

1. A system for the placement of dental implants, comprising:
- one or more posts (100), each configured for the coupling thereof in a dental implant of a patient, wherein each post (100) includes a plurality of first locators (110) made of a radiologically visible material;
- a reference element (200), adapted for the positioning thereof around the teeth of said patient, wherein said reference element (200) includes a series of second locators (210) made of a radiologically visible material, distributed at prefixed distance and position on a surface of the reference element (200);
- an image acquisition system configured for obtaining at least one three-dimensional image of the posts (100) and of said reference element (200) when the posts (100) with their first locators (110) are coupled in the implant and when the reference element (200) with its second locators (210) is positioned around the teeth of the patient; and
- a processing unit configured for processing said acquired three-dimensional image by:
- implementing a first algorithm which:
▪ detects how the second locators (210) in the reference element (200) are arranged in the image,
▪ calculates the distance between the second locators (210) in the image, and
▪ calculates a correction factor by comparing said calculated distance with said prefixed distance and position; and
- implementing a second algorithm which:
▪ detects in the image the first locators (110),
▪ groups the detected first locators (110), in correspondence to each post (100), by the number of elements and by proximity,
▪ applies an adjustment factor, taking into account said calculated correction factor, to one or more of the groups using a third point iteration algorithm, providing a series of geometrical transformations of the first locators (110), and
▪ prepares a file using said series of geometrical transformations, such that the placement and axial orientation are indicated for each post (100).

2. The system according to claim 1, wherein the first locators (110) made of a radiologically visible material comprise one or more radiopaque markers.

3. The system according to claim 1 or 2, wherein the posts (100) comprise a radiotransparent body which houses encapsulated therein said first locators (110).

4. The system according to any one of the preceding claims, wherein the three-dimensional image is a tomographic image obtained by means of a cone-beam computed tomography or computed axial tomography technique.

5. The system according to any one of the preceding claims, wherein the reference element (200) has a horseshoe shape suitable of being positioned inside the mouth of the patient or secured outside the mouth of the patient.

6. The system according to claim 5, wherein the reference element (200) is made of a plastic material.

7. The system according to claim 1, further comprising a control element having known dimensions and configured for the coupling thereof to the patient during image acquisition, wherein the control element comprises a ruby ball.

8. The system according to claim 1, wherein, before detecting the arrangement of the second locators (210) in the reference element (200), said first algorithm checks whether or not the image has experienced movement during the acquisition by using a control object having known dimensions, coupled to the patient during the acquisition, and comparing characteristics of the acquired image with said control object, wherein if a result of said movement check certifies that the image has experienced movement, it is discarded.

9. The system according to claim 8, wherein the comparison comprises checking intensity characteristics, including brightness or grayscale level, and morphological characteristics, including diameter and sphericity, of the image with the control object.

10. A computer program product including code instructions which, once implemented in a computing system, cause a processing unit of the computing system to perform the processing of at least one acquired three-dimensional image by:
- implementing a first algorithm which:
▪ detects how second locators (210) in a reference element (200) are arranged in the image, the reference element (200) being adapted for the positioning thereof around the teeth of a patient and including a series of said second locators (210), the latter being made of a radiologically visible material and being distributed at prefixed distance and position on a surface of the reference element (200);
▪ calculates the distance between the second locators (210) in the image; and
▪ calculates a correction factor by comparing said calculated distance with said prefixed distance and position; and
- implementing a second algorithm which:
▪ detects in the image first locators (110), the latter being included in one or more posts (100) and being made of radiologically visible material, each one of the one or more posts (100) being configured for the coupling thereof in a dental implant of a patient;
▪ groups the detected first locators (110), in correspondence to each post (100), by the number of elements and by proximity;
▪ applies an adjustment factor, taking into account said calculated correction factor, to one or more of the groups using a third point iteration algorithm, providing a series of geometrical transformations of the first locators (110); and
▪ prepares a file using said series of geometrical transformations, such that the placement and axial orientation are indicated for each post (100).

## Patentansprüche

1. System zum Platzieren von Zahnimplantaten, umfassend:
- einen oder mehrere Stifte (100), von denen jeder zum Einsetzen in ein Zahnimplantat eines Patienten ausgelegt ist, wobei jeder Stift (100) eine Vielzahl von ersten Positionsgebern (110) aus einem radiologisch sichtbaren Material aufweist;
- ein Referenzelement (200), das zur Positionierung um die Zähne des genannten Patienten herum ausgebildet ist, wobei das genannte Referenzelement (200) eine Reihe von zweiten Positionsgebern (210) aus einem radiologisch sichtbaren Material umfasst, die in vorgegebenem Abstand und vorgegebener Position auf einer Oberfläche des Referenzelements (200) verteilt sind;
- ein Bilderfassungssystem, das dazu ausgelegt ist, mindestens ein dreidimensionales Bild der Stifte (100) und des genannten Referenzelements (200) zu erstellen, wenn die Stifte (100) mit ihren ersten Positionsgebern (110) in das Implantat eingesetzt sind und das Referenzelement (200) mit seinen zweiten Positionsgebern (210) um die Zähne des Patienten herum positioniert ist; und
- eine Prozessoreinheit, ausgelegt zum Verarbeiten des genannten erfassten dreidimensionalen Bildes durch:
- Anwendung eines ersten Algorithmus, der:
▪ erkennt, wie die zweiten Positionsgeber (210) in dem Referenzelement (200) auf dem Bild angeordnet sind,
▪ den Abstand zwischen den zweiten Positionsgebern (210) auf dem Bild berechnet, und
▪ durch Vergleichen des genannten berechneten Abstands mit dem genannten vorgegebenen Abstand und der vorgegebenen Position einen Korrekturfaktor errechnet; und
- Anwendung eines zweiten Algorithmus, der:
▪ die ersten Positionsgeber (110) auf dem Bild detektiert,
▪ die detektierten ersten Positionsgeber (110) in Bezug auf die einzelnen Stifte (100) nach Anzahl der Elemente und nach Nähe gruppiert,
▪ unter Berücksichtigung des genannten errechneten Korrekturfaktors und unter Einsatz eines Drittpunkt-Iterationsalgorithmuseinen Ausgleichsfaktor auf eine oder mehrere der Gruppen zur Bereitstellung einer Reihe geometrischer Transformationen der ersten Positionsgeber (110) anwendet, und
▪ unter Verwendung der genannten Reihe geometrischer Transformationen eine Datei erstellt, in der Platzierung und axiale Ausrichtung eines jeden Stifts (100) angegeben sind.

2. System nach Anspruch 1, wobei die aus einem radiologisch sichtbaren Material bestehenden ersten Positionsgeber (110) einen oder mehrere röntgendichte Marker enthalten.

3. System nach Anspruch 1 oder 2, wobei die Stifte (100) einen röntgendurchlässigen Körper zur darin eingekapselten Aufnahme der genannten ersten Positionsgeber (110) aufweisen.

4. System nach einem der vorstehenden Ansprüche, wobei das dreidimensionale Bild ein mittels einer Kegelstrahl-Computertomographie oder eines axialen Computertomographie-Verfahrens gewonnenes tomographisches Bild ist.

5. System nach einem der vorstehenden Ansprüche, wobei das Referenzelement (200) eine Hufeisenform besitzt, die dazu geeignet ist, im Mund des Patienten positioniert oder außerhalb desselben befestigt zu werden.

6. System nach Anspruch 5, wobei das Referenzelement (200) aus einem Kunststoffmaterial besteht.

7. System nach Anspruch 1, das ferner ein Kontrollelement mit bekannten Abmessungen umfasst, das zur Anbringung an dem Patienten während der Bilderfassung ausgelegt ist, wobei das Kontrollelement eine Rubinkugel umfasst.

8. System nach Anspruch 1, wobei der genannte erste Algorithmus vor dem Erfassen der Anordnung der zweiten Positionsgeber (210) in dem Bezugselement (200) unter Verwendung eines während der Erfassung an dem Patienten angebrachten Kontrollobjekts mit bekannten Abmessungen und durch Vergleichen von Merkmalen des erfassten Bildes mit dem genannten Kontrollobjekt prüft, ob das Bild während der Erfassung eine Bewegung erfahren hat oder nicht, wobei es verworfen wird, wenn ein Ergebnis der genannten Bewegungsprüfung bestätigt, dass das Bild eine Bewegung erfahren hat.

9. System nach Anspruch 8, wobei der Vergleich das Überprüfen von Intensitätsmerkmalen, darunter Helligkeit oder Graustufenpegel, und morphologischen Merkmalen, darunter Durchmesser und Kugelförmigkeit, des Bildes gegenüber dem Kontrollobjekt umfasst.

10. Ein Computerprogrammprodukt, das Codebefehle enthält, die, nach Implementierung in ein Computersystem, eine Prozessoreinheit des Computersystems zur Verarbeitung von mindestens einem erfassten dreidimensionalen Bild veranlassen und zwar durch:
- Anwendung eines ersten Algorithmus, der:
▪ ermittelt, wie zweite Positionsgeber (210) in einem Referenzelement (200) auf dem Bild angeordnet sind, wobei das Referenzelement (200) für seine Positionierung um die Zähne eines Patienten herum ausgebildet ist und eine Reihe der genannten zweiten Positionsgeber (210) umfasst, wobei Letztere aus einem radiologisch sichtbaren Material bestehen und in vorgegebenem Abstand und vorgegebener Position auf einer Oberfläche des Referenzelements (200) verteilt sind;
▪ den Abstand zwischen den zweiten Positionsgebern (210) auf dem Bild berechnet, und
▪ durch Vergleichen des genannten berechneten Abstands mit dem genannten vorgegebenen Abstand und der vorgegebenen Position einen Korrekturfaktor errechnet; und
- Anwendung eines zweiten Algorithmus, der:
▪ erste Positionsgeber (110) auf dem Bild detektiert, wobei Letztere in einem oder mehreren Stiften (100) enthalten sind und aus radiologisch sichtbarem Material bestehen, wobei der oder die Stifte (100) alle zum Einsetzen in ein Zahnimplantat eines Patienten ausgelegt sind;
▪ die detektierten ersten Positionsgeber (110) in Bezug auf die einzelnen Stifte (100) nach Anzahl der Elemente und nach Nähe gruppiert;
▪ unter Berücksichtigung des genannten errechneten Korrekturfaktors und unter Einsatz eines Drittpunkt-Iterationsalgorithmus einen Ausgleichsfaktor auf eine oder mehrere der Gruppen zur Bereitstellung einer Reihe geometrischer Transformationen der ersten Positionsgeber (110) anwendet, und
▪ unter Verwendung der genannten Reihe geometrischer Transformationen eine Datei erstellt, wobei Platzierung und axiale Ausrichtung eines jeden Stifts (100) angegeben werden.

## Revendications

1. Système pour le placement d'implants dentaires comportant :
- un ou plusieurs postes (100) chacun configuré pour les coupler dans un implant dentaire d'un patient, où chaque poste (100) comprend une pluralité de premiers localisateurs (110) faits en un matériau radiologiquement visible ;
- un élément de référence (200), adapté pour son positionnement autour des dents de ce patient, où cet élément de référence (200) comprend une série de deuxièmes localisateurs (210) faits en un matériau radiologiquement visible, distribués à une distance et une position prédéterminée sur une surface de l'élément de référence (200) ;
- un système d'obtention d'images configuré pour obtenir au moins une image tridimensionnelle des postes (100) et de cet élément de référence (200) lorsque les postes (100) avec leurs localisateurs (110) sont couplés dans l'implant et lorsque l'élément de référence (200) avec ses deuxièmes localisateurs (210) est positionné autour des dents du patient ; et
- une unité de traitement configurée pour traiter cette image tridimensionnelle obtenue par :
- la mise en oeuvre d'un premier algorithme qui :
• détecte comment les deuxièmes localisateurs (210) dans l'élément de référence (200) sont aménagés dans l'image,
• calcule la distance entre les deuxièmes localisateurs (210) dans l'image, et
• calcule un facteur de correction en comparant cette distance calculée avec la distance et position prédéterminées ; et
- la mise en œuvre d'un deuxième algorithme qui :
• détecte dans l'image les premiers localisateurs (110),
• groupe les premiers localisateurs détectés (110), en correspondance avec chaque poste (100), par le nombre d'éléments et par proximité,
• applique un facteur d'ajustement, en tenant compte de ce facteur de correction, à un ou plusieurs groupes en utilisant un troisième algorithme d'itération, offrant une série de transformations géométriques des premiers localisateurs (110) ; et
• prépare un fichier en utilisant ces séries de transformations géométriques, de sorte que le placement et l'orientation axiale soient indiqués pour chaque poste (100).

2. Système conformément à la revendication 1, où les premiers localisateurs (110) faits en matériau radiologiquement visible comporte un ou plusieurs marqueurs radio-opaques.

3. Système conformément à la revendication 1 ou 2, où les postes (100) comportent un corps radio-transparent qui héberge, encapsulés à son intérieur, ces premiers localisateurs (110).

4. Système conformément à une quelconque des revendications précédentes où l'image tridimensionnelle est une image tomographique obtenue au moyen d'une technique de tomographie par ordinateur à faisceau unique ou tomographie axiale par ordinateur.

5. Système conformément à une quelconque des revendications précédentes où l'élément de référence (200) possède une forme de fer à cheval appropriée pour être bien positionnée à l'intérieur de la bouche du patient ou fixée à l'extérieur de la bouche du patient.

6. Système conformément à la revendication 5, où l'élément de référence (200) est fait en matière plastique.

7. Système conformément à la revendication 1, comportant en plus un élément de contrôle ayant des dimensions connues et configuré pour le coupler au patient durant l'obtention d'image où l'élément de contrôle comporte une bille rubis.

8. Système conformément à la revendication 1 où, avant de détecter l'aménagement des deuxièmes localisateurs (210) dans l'élément de référence (200) ce premier algorithme vérifie si l'image a bougé ou non durant l'obtention en utilisant un objet de contrôle ayant des dimensions connues, couplé au patient durant l'obtention et en comparant les caractéristiques de l'image obtenue avec cet objet de contrôle, où si un résultat de cette vérification de mouvement vérifie que l'image a bougé, elle est écartée.

9. Système conformément à la revendication 8, où la comparaison comporte la vérification des caractéristiques d'intensité, y compris la luminosité ou le niveau dans l'échelle de gris et les caractéristiques morphologiques, le diamètre et la sphéricité y compris, de l'image avec l'objet de contrôle.

10. Un produit de programme informatique comprenant des instructions codées qui, une fois mises en œuvre dans un système informatique, fait qu'une unité de traitement du système informatique effectue le traitement d'au moins une image tridimensionnelle obtenue par :
- la mise en œuvre d'un premier algorithme qui :
• détecte comment des deuxièmes localisateurs (210) dans l'élément de référence (200) sont aménagés dans l'image, l'élément de référence (200) étant adapté pour leur positionnement autour des dents d'un patient et comprenant une série de ces deuxièmes localisateurs (210), ce dernier étant fait en un matériau radiologiquement visible et étant distribué à une distance et position prédéterminées sur une surface de l'élément de référence (200) ;
• calculre la distance entre les deuxièmes localisateurs (210) dans l'image ; et
• calcule un facteur de correction en comparant cette distance calculée avec la distance et position prédéterminées ; et
- la mise en œuvre d'un deuxième algorithme qui :
• détecte dans l'image les premiers localisateurs (110), ce dernier étant compris dans un ou plusieurs postes (100) et fait en un matériau radiologiquement visible et chacun du ou des postes (100) est configurés pour leur couplage dans un implant dentaire d'un patient ;
• groupe les premiers localisateurs détectés (110), en correspondance avec chaque poste (100), par le nombre d'éléments et par proximité,
• applique un facteur d'ajustement, en tenant compte de ce facteur de correction, à un ou plusieurs groupes en utilisant un troisième algorithme d'itération, offrant une série de transformations géométriques des premiers localisateurs (110) et
• prépare un fichier en utilisant ces séries de transformations géométriques, de sorte que le placement et l'orientation axiale soient indiqués pour chaque poste (100).
